# EUROPEAN PATENT SPECIFICATION

(11) **EP 0 478 492 B1**
(45) Date of publication and mention of the grant of the patent: **19.04.1995**
(21) Application number: 91610080.3
(22) Date of filing: 25.09.1991
(51) Int. Cl.: B01J 20/00, A01K 1/015

(54) **Preparation and use of absorbent material as cat litter**
Herstellung und Verwendung von Sorbentmittel als Katzenstreu
Preparation et utilisation du matériau absorbant comme litière pour chat

(30) Priority: 26.09.1990 DK 2328/90
(43) Date of publication of application: 01.04.1992
(73) Proprietor: SKAMOL A/S, DK-7900 Nykobing Mors (DK)
(72) Inventor: Hornshoj-Moller, Tom, DK-7900 Nykobing Mors (DK); Johansson, Stig Fritjof, DK-7900 Nykobing Mors (DK)
(74) Representative: Knudsen, Christian Egtved

(56) References cited:
- EP-A- 0 303 760
- DE-A- 3 633 027
- GB-A- 2 205 089

## Description

The invention relates to the use of an absorbent material and a method for the preparation thereof. The absorbent material is preferably to be used as cat litter and comprises a loosely granulated or grainy material resulting from flue-gas purification with capabilities to collect, bind and possibly decompose the matter to be absorbed.

Different absorbent materials to be used as cat litter are known which have been prepared especially for this purpose. The starting material is rarely particularly expensive, but has often been provided with the sole purpose of preparing the absorbent material. US patent No. 4,163,674 for instance discloses a gypsum granulate for inter alia the absorption of animal excrements. Compared to the natural species of clay conventionally used, said gypsum granulate is able to provide a product having a uniform quality and at a reasonable price. A product with known composition is aimed at to obtain a uniform result.

US patent No. 4,129,094 discloses the use of fly ash, bottom ash and/or boiler slag as an absorbent material to be used as cat litter. The fly ash, the bottom ash and the boiler slag are by-products of the combustion of pulverized coal, for instance in power plants. The by-products are removed mechanically, for instance by filtration of flue-gases or removal from the combustion chamber. At least one of the by-products: fly ash, bottom ash or boiler slag may be admixed with Fuller's earth, whereupon the mixture may be used as absorbent material in cat litter compositions.

DE-C2 3,726,665 discloses a method of increasing the absorption capacity of calcium hydroxide in connection with inter alia sulphur dioxide from flue-gas.

DE-A1 3,633,027 discloses a method of continuously producing granulated material from two sorts of gypsum and perlite. This publication does not disclose the use of the waste product from flue-gas purification as the only starting material to be admixed with water.

Otherwise, known absorbent granulates for pets are substantially composed of natural products of mineralogical origin, such as for instance attapulgite, bentonite, diatomite or of organic products, such as for instance chips or paper. Artificially prepared granulates include for instance crushed gas concrete or gypsum granulate. In recent years, the demand for a granulate to be used as pet litter has increased, particularly in urban areas. Said granulate is substantially to be used for cats and small rodents.

There are various different products on the market, especially for cats. The products all exhibit different characteristics. Various problems are, however, associated with their use, some are very dusty when poured out in the pan, some exhibit a poor absorbent capacity, some have a poor deodorizing capability, others are dragged into the household in the cat's paws, some form dust which tends to cling to the pan after emptying, while yet others have a pH value which may prove unfavourable at use.

It is the object of the invention to provide an absorbent material, preferably to be used as cat litter, and which may be prepared almost without the use of natural resources and almost solely by means of waste products, said waste products being inevitable and available in large and stable quantities and where the storage of the raw material prior to the preparation does not require extensive precautionary measures.

The absorbent material of the type mentioned in the introduction above is characterised in that it comprises a waste product resulting from flue-gas purification, especially flue-gas desulphurification. As a result, the starting material is very inexpensive and available in large quantities with an almost uniform composition, the composition however not being so well-defined that the waste product can be used without further preparation.

An embodiment of the absorbent material according to the invention is characterised in that the waste product from flue-gas purification comes from power stations which burn fuel with a large sulphur content, for instance coal or oil. As a result, compounds are obtained which are suitable as granulate for cat litter compositions.

According to the invention, the absorbent material may comprise from 0% by weight to 10% by weight of Ca(OH)₂, from 40% by weight to 80% by weight of CaSO₃ and from 5% by weight to 15% by weight of CaSO₄. An absorbent material is thereby obtained which is particularly effectively capable of collecting, binding and decomposing the matter to be absorbed.

It has proved advantageous to admix an amount of filler, for instance moler or fly ash, corresponding to from 0% by weight to 50% by weight of the waste product from flue-gas purification, whereby the absorbent material is also provided with the characteristics of the filler, for instance improved porosity.

According to the invention, the absorbent material may advantageously have a grain size of from 0.5 mm to 10 mm, preferably from 1 mm to 5 mm.

Furthermore, it has been found advantageous that the absorbent material has a specific weight of from 400 kg/m³ to 1000 kg/m³, preferably from 500 kg/m³ to 750 kg/m³.

The invention moreover relates to a method of preparing the absorbent material, by which method the starting material in the form of a waste product from flue-gas purification is firstly granulated, subsequently admixed with water, whereupon it is granulated again and powdered or subjected to treatment in a Rulator, eventually followed by drying. As a result, a particularly inexpensive preparation and uniform quality of the product are obtained.

An embodiment of the invention may be that 15 kg to 40 kg, preferably 25 kg of starting material in the form of the waste product from flue-gas purification are firstly granulated for ½ minute to 2 minutes, preferably 1 minute, that 2½ litres to 15 litres of water, preferably 5 litres of water are then added in the course of from 1 minute to 4 minutes, preferably 2 minutes, followed by granulation for from 6 minutes to 24 minutes, preferably 12 minutes, that the product is then led into a Rulator, whereupon the product thus prepared is dried for 12 hours to 48 hours, preferably 24 hours. This method has been found particularly advantageous for the preparation of the absorbent material.

A second embodiment of the invention may be that from 15 kg to 40 kg, preferably 30 kg of starting material are admixed with 6 litres to 24 litres of water, preferably 12 litres of water, followed by granulation for from 3 minutes to 12 minutes, preferably 6 minutes, that from 1 kg to 6 kg, preferably 3 kg of the starting material are used for powdering, that further granulation takes place for from 1 minute to 6 minutes, preferably for 3 minutes, whereupon the product thus prepared is dried for from 12 hours to 48 hours, preferably 24 hours.

This method has also been found advantageous when preparing the absorbent material.

The invention is explained below with reference to the following three examples:

### Example 1:

25 kg of starting material were led to a PL granulator. Dry-mixing was carried out for 1 minute and 5 litres of water were sprinkled on in the course of 2 minutes. The granulator then ran for 12 minutes. Subsequently, the granulate formed was removed and led through a Rulator. Finally, the granulate was dried for 24 hours in a desiccator cupboard. The finished granulate had the following characteristics:
Specific weight: 706 kg/m³
Absorption (Westinghouse), water: 68%
Sieve analysis
- 3.36 mm : 19.8%
3.36 - 2.00 mm : 19.3%
2.00 - 1.00 mm : 36.6%
1.00 - 0.50 mm : 20.8%
0.50 - 0.25 mm : 3.2%
0.25 - : 0.3%
Dust (wet sifting on 125 micrometres sieve): 0.04%

### Example 2:

25 kg of starting material was led to the PL granulator. Dry mixing was carried out for 1 minute. 8 litres of water were then sprinkled on in the course of 2 minutes. The granulator then ran for 9 minutes. The granulate was removed and led through the Rulator. The granulate was dried for 24 hours in a desiccator cupboard, whereupon the granulate exhibited the following characteristics:
Specific weight: 747 kg/m³
Absorption (Westinghouse), water: 61%
Sieve analysis
- 3.36 mm : 14.8%
3.36 - 2.00 mm : 22.8%
2.00 - 1.00 mm : 37.7%
1.00 - 0.50 mm : 17.6%
0.50 - 0.25 mm : 6.4%
0.25 - : 0.7%
Dust (wet sifting on 125 micrometres sieve): 0.79%

### Example 3:

30 kg of the starting material was led to an Eirich granulator (RV08 Sternwirbler Gegenstrom). 12 litres of water were then added. Subsequently, the granulator ran for 6 minutes at 700 r.p.m.. 3 kg of the starting material were then used for powdering and the granulator ran for another 3 minutes at 350 r.p.m.. The granulate was dried for 24 hours in a desiccator cupboard, whereupon the granulate had the following characteristics:
Specific weight: 702 kg/m³
Absorption (Westinghouse), water: 53.7%
Sieve analysis
- 5.60 mm : 6.4%
5.60 - 4.76 mm : 9.9%
4.76 - 3.36 mm : 20.3%
3.36 - 2.00 mm : 42.5%
2.00 - 1.00 mm : 20.8%
1.00 - 0.50 mm : 0.1%
0.50 - 0.25 mm : 0.0%
0.25 - : 0.0%
Dust (wet sifting on 125 micrometres sieve): 0.01%

The absorbent material is preferably suitable for use as cat litter, but it may also be used in other places where an absorption capacity is required. The absorbent material comprises a loosely granulated or grainy material with capabilities to collect, bind and possibly decompose the matter to be absorbed. The capability to collect implies that the material either absorbs the liquid directly or binds the liquid between its grains. The capability to bind the material implies that the absorbent material is not immediately inclined to give off the moisture absorbed. The capability to decompose comprises bactericidal effect, desinfectant effect, neutralizing effect and reducing effect, where the neutralizing effect may neutralize the acid or adjust the pH value in for instance urine, respectively, where the bactericidal effect kills possible bacteria and where the neutralizing effect decomposes smelling substances; this may also take place by means of a reduction. The absorbent material comprises a waste product from flue-gas purification.

The waste product from flue-gas purification is composed of a powder which is the result of flue-gas purification by spray absorption. In short, the process is as follows: The flue-gas firstly passes through a filter, where the dust particles/fly ash are removed. From here the flue-gas is led into a spray absorber tower where slaked lime is added through a nozzle arrangement in the top and by means of injection at the bottom of the tower. The flue-gas continues from the spary absorber tower to a filter where the desulphurification product/the waste product is separated and further to the chimney.

The waste product from the flue-gas purification is the result of combustion of fossile fuels with a large sulphur content, such as coal or oil. Especially coal from Eastern Europe tend to have a very high sulphur content which makes it absolutely necessary to employ an effective flue-gas purification. The fuel may also be peat or wooden chips.

The absorbent material comprises from 0% by weight to 10% by weight Ca(OH)₂, from 40% by weight to 80% by weight of CaSO₃ and from 5% by weight to 15% by weight of CaSO₄. In connection with the preparation, a filler may be added to the above. The filler may comprise from 0% by weight to 50% by weight of the waste product from the flue-gas purification. The filler may for instance be moler or fly ash.

The grain size of the absorbent material is in the range of from 0.5 mm to 10 mm, preferably from 1 mm to 5 mm. The specific weight is from 400 kg/m³ to 1000 kg/m³, preferably from 500 kg/m³ to 750 kg/m³.

The method of preparation is generally characterised in that on the basis of the above starting material a granulate is prepared with water without the addition of a binder. In order to prevent the granulate from caking, said granulate may be powdered with the starting material. If a PL granulator was used, the granulate must be passed through a Rulator prior to the powdering. After the granulation, the granulate is sieved and dried. The granulate is now ready for packaging.

The principle of a PL granulator (also called a Peter Liep granulator, manufactured by Bluetec A/S in Hjørring, Denmark) is that granulation takes place by means of grinding bodies and mixing arms in a vertically arranged mixing apparatus. If anything, the PL granulator may be compared to a ball grinder which is flat and has an almost vertical axis. In the PL granulator per se both kneading and pelletizing of the starting material take place.

A Rulator comprises an almost horizontal pipe with a diagonal axis, whereby a diagonally rotating drum is formed. The powdering is carried out in the Rulator while adding a small quantity of liquid. The Rulator is also manufactured by Bluetec A/S in Hjørring, Denmark.

An Eirich granulator is a cylindrical drum with an almost vertical axis, said drum being provided with quickly rotating knives and blades and not with balls as in the PL granulator. The drum and the knife rotate opposite each other. The Eirich granulator is manufactured by Maschinenfabrik Gustav Eirich, Hardheim, Germany. During the preparation process, the granulators are filled only one quater to one half to allow the material to be spun around in the granulators.

For toxicological reasons, the pH value of the finished product may be wholly or partially adjusted by means of neutralization with carbon dioxide. The neutralization may take place at any time during the preparation. A neutral pH, of for instance about 8, is aimed at.

## Claims

1. A method for the preparation of an absorbent material, characterised in that the starting material in the form of a waste product resulting from flue-gas treatment is firstly granulated, subsequently admixed with water, whereupon it is granulated again and powdered or subjected to treatment in a Rulator, eventually followed by drying.

2. A method for the preparation of an absorbent material as claimed in claim 1, characterised in that 15 kg to 40 kg, preferably 25 kg of starting material in the form of the waste product from flue-gas purification are firstly granulated for ½ minute to 2 minutes, preferably 1 minute, that 2½ litres to 15 litres of water, preferably 5 litres of water are then added in the course of from 1 minute to 4 minutes, preferably 2 minutes, followed by granulation for from 6 minutes to 24 minutes, preferably 12 minutes, that the product is then led into a Rulator, whereupon the product thus prepared is dried for 12 hours to 48 hours, preferably 24 hours.

3. A method for the preparation of an absorbent material as claimed in claim 1, characterised in that from 15 kg to 40 kg, preferably 30 kg of starting material are admixed with 6 litres to 24 litres of water, preferably 12 litres of water, followed by granulation for from 3 minutes to 12 minutes, preferably 6 minutes, that from 1 kg to 6 kg, preferably 3 kg of the starting material are used for powdering, that further granulation takes place for from 1 minute to 6 minutes, preferably for 3 minutes, whereupon the product thus prepared is dried for from 12 hours to 48 hours, preferably 24 hours.

4. The use as cat litter of an absorbent material comprising a waste product resulting from flue-gas purification, especially flue-gas desulphurization, which material has been made according to the method outlined in any of claims 1-3.

5. The use as cat litter of an absorbent material as claimed in claim 4, wherein the waste product from flue-gas purification comes from power stations which burn fuel with a large sulphur content, for instance coal or oil.

6. The use as cat litter of an absorbent material as claimed in claim 4 or 5, wherein it comprises from 0% by weight to 10% by weight of Ca(OH)₂, from 40% by weight to 80% by weight of CaSO₃ and from 5% by weight to 15% by weight of CaSO₄.

7. The use as cat litter of an absorbent material as claimed in one or more of the preceding claims 4-6, wherein an amount of filler, for instance moler or fly ash, corresponding to from 0% by weight to 50% by weight of the waste product from the flue-gas purification is added.

8. The use as cat litter of an absorbent material as claimed in one or more of the preceding claims 4-7, wherein it has a grain size of from 0.5 mm to 10 mm, preferably from 1 mm to 5 mm.

9. The use as cat litter of an absorbent material as claimed in one or more of the preceding claims 4-8, wherein it has a specific weight of from 400 kg/m³ to 1000 kg/m³, preferably from 500 kg/m³ to 750 kg/m³.

## Patentansprüche

1. Verfahren zur Herstellung eines Sorbentmittels, dadurch gekennzeichnet, daß das Ausgangsmaterial in Form eines Abfallprodukts aus der Rauchgasbehandlung zunächst granuliert und anschließend Wasser beigemischt wird, woraufhin es erneut granuliert und bestäubt oder der Behandlung in einem Rulator unterzogen wird, schließlich gefolgt von einer Trocknung.

2. Verfahren zur Herstellung eines Sorbentmittels nach Anspruch 1, dadurch gekennzeichnet, daß 15 kg bis 40 kg, vorzugsweise 25 kg des Ausgangsmaterials in Form eines Abfallprodukts aus der Rauchgasreinigung zunächst 1/2 bis 2 Minuten, vorzugsweise 1 Minute granuliert wird, daß 2 1/2 Liter bis 15 Liter Wasser, vorzugsweise 5 Liter Wasser im Verlauf zwischen 1 Minute bis 4 Minuten, vorzugsweise 2 Minuten zugefügt werden, gefolgt von einer Granulierung zwischen 6 Minuten und 24 Minuten, vorzugsweise 12 Minuten, daß dann das Produkt in einen Rulator eingeleitet wird, woraufhin das so präparierte Produkt 12 Stunden bis 48 Stunden, vorzugsweise 24 Stunden lang getrocknet wird.

3. Verfahren zur Herstellung eines Sorbentmittels nach Anspruch 1, dadurch gekennzeichnet, daß zwischen 15 kg und 40 kg, vorzugsweise 30 kg eines Ausgangsmaterials mit 6 bis 24 Litern Wasser, vorzugsweise 12 Litern Wasser gemischt werden, gefolgt von einer Granulierung zwischen 3 Minuten und 12 Minuten, vorzugsweise 6 Minuten, daß 1 kg bis 6 kg, vorzugsweise 3 kg des Ausgangsmaterials zur Bestäubung verwendet werden, daß eine weitere Granulierung zwischen 1 und 6 Minuten, vorzugsweise 3 Minuten stattfindet, woraufhin das so zubereitete Produkt zwischen 12 und 48 Stunden, vorzugsweise 24 Stunden lang getrocknet wird.

4. Verwendung eines Sorbentmittels, umfassend ein Abfallprodukt aus der Rauchgasreinigung, speziell der Rauchgasentschwefelung, welches Materials entsprechend dem Verfahren nach einem der Ansprüche 1 bis 3 hergestellt worden ist, als Katzenstreu.

5. Verwendung eines Sorbentmittels gemäß Anspruch 4 als Katzenstreu, wobei das Abfallprodukt aus der Rauchgasreinigung aus Kraftstationen stammt, die Brennstoff mit einem hohen Schwefelgehalt, beispielsweise Kohle oder Öl, verbrennen.

6. Verwendung eines Sorbentmittels nach Anspruch 4 oder 5 als Katzenstreu, wobei das Material zwischen 0 und 10 Gew.% Ca(OH)₂, zwischen 40 bis 80 Gew.% CaSO₃ und zwischen 5 und 15 Gew.% CaSO₄ enthält.

7. Verwendung eines Sorbentmittels nach einem oder mehr der Ansprüche 4 bis 6 als Katzenstreu, wobei eine gewisse Menge von Füllstoff, z.B. Moler oder Flugasche, zwischen 0 und 50 Gew.% des Abfallprodukts aus der Rauchgasreinigung zugefügt ist.

8. Verwendung eines Sorbentmittels nach einem oder mehr der Ansprüche 4 bis 7 als Katzenstreu, wobei es eine Korngröße zwischen 0,5 mm und 10 mm, vorzugsweise zwischen 1 mm und 5 mm aufweist.

9. Verwendung eines Sorbentmittels nach einem oder mehr der Ansprüche 4 bis 8 als Katzenstreu, wobei das Material ein spezifisches Gewicht zwischen 400 kg/m³ und 1000 kg/m³, vorzugsweise zwischen 500 kg/m³ und 750 kg/m³ besitzt.

## Revendications

1. Méthode de préparation d'une matière absorbante, caractérisée en ce que la matière de départ sous forme de rebut résultant du traitement de gaz de fumée est d'abord granulée, ensuite mélangée avec de l'eau, après quoi elle est à nouveau granulée et pulvérisée ou sujette à traitement dans un Rulator, éventuellement suivi d'un séchage.

2. Méthode pour la préparation d'une matière absorbante suivant la revendication 1, caractérisée en ce que de 15 kg à 40 kg, de préférence 25 kg de matière de départ sous la forme de rebut résultant de la purification de gaz de fumée sont d'abord granulés pendant 1/2 minute à 2 minutes, de préférence 1 minute, que 2 1/2 litres à 15 litres d'eau, de préférence 5 litres d'eau, sont alors ajoutés pendant 1 minute à 4 minutes, de préférence 2 minutes, suivi par une granulation pendant 6 minutes à 24 minutes, de préférence 12 minutes, que le produit est alors conduit dans un Rulator, où le produit ainsi préparé est séché pendant 12 heures à 48 heures, de préférence 24 heures.

3. Méthode de préparation d'une matière absorbante selon la revendication 1, caractérisée en ce que de 15 kg à 40 kg, de préférence 30 kg de matière de départ sont mélangé avec 6 litres à 24 litres d'eau, de préférence 12 litres d'eau, suivi d'une granulation pendant une période de 3 minutes a 12 minutes, de préférence 6 minutes, que 1 kg à 6 kg, de préférence 3 kg de matière de départ sont utilisés pour la pulvérisation, qu'une granulation subséquente s'effectue pendant une période de 1 minute à 6 minutes, de préférence pendant 3 minutes, après quoi le produit ainsi préparé est séché pendant une période de 12 heures à 48 heures, de préférence 24 heures.

4. Utilisation comme litière pour chat d'une matière absorbante comprenant un rebut résultant de la purification de gaz de fumée, particulièrement de la désulfurisation de gaz de fumée, laquelle matière a été fabriquée selon une des méthodes exposées dans une quelconque des revendications 1 à 3.

5. Utilisation comme litière pour chat d'une matière absorbante selon la revendication 4, dans laquelle le rebut résultant de la purification de gaz de fumée provient de centrales électriques qui brûlent des combustibles à grande teneur en soufre, par exemple du charbon ou du mazout.

6. Utilisation comme litière pour chat d'une matière absorbante selon une des revendications 4 ou 5, qui comprend de 0% par poids à 10% par poids de Ca(OH)₂, de 40% par poids à 80% par poids de CaSO₃ et de 5% par poids à 15% par poids de CaSO₄.

7. Utilisation comme litière pour chat d'une matière absorbante selon une ou plusieurs des revendications précédentes 4 à 6, dans laquelle une quantité de matière de remplissage, par exemple de la diatomite ou des cendres volantes, correspondant à de 0% par poids à 50% par poids de rebut résultant de la purification de gaz de fumée, est ajoutée.

8. Utilisation comme litière pour chat d'une matière absorbante selon une ou plusieurs des revendications précédentes 4 à 7, qui dispose d'une taille de grain de 0.5 mm à 10 mm, de préférence de 1 mm à 5 mm.

9. Utilisation comme litière pour chat d'une matière absorbante selon une ou plusieurs des revendications précédentes 4 à 8, qui dispose d'un poids spécifique de 400 kg/m³ a 1000 kg/m³, de préférence de 500 kg/m³ à 750 kg/m³.
